# EUROPEAN PATENT APPLICATION

(11) **EP 1 223 426 A1**
(43) Date of publication of application: **17.07.2002**
(21) Application number: 02250301.5
(22) Date of filing: 16.01.2002
(51) Int. Cl.: G01N 30/36

(54) **Fluid transport apparatus and method**

(30) Priority: 16.01.2001 GB 0101118
(71) Applicant: IMPERIAL COLLEGE OF SCIENCE, TECHNOLOGY & MEDICINE, London SW7 2AZ (GB)
(72) Inventor: Manz, Andreas, East Molesey, Surrey KT8 0JT (GB); Goedecke, Nils, London SW9 9JS (GB)
(74) Representative: Robinson, Nigel Alexander Julian

(57) **Abstract**

A fluid transport apparatus, comprising a transport channel (3) including a fluid inlet (2); and an evaporator (5) including at least one evaporator channel arranged to receive fluid, each evaporator channel having at least one open fluid outlet operable to evaporate fluid at the at least one fluid outlet so as to cause the flow of fluid thought the transport channel.

## Description

The present invention relates to a fluid transport apparatus and method, for example to a chromatographic system.

Chromatographic systems have seen tremendous development in recent years but there is still a requirement for a micro-fabricated chip-based system which utilises minimal fluid volumes and provides for rapid separation of the analytes.

In contrast to other analysis techniques, such as capillary electrophoresis (CE) (1, 2), high performance/pressure liquid chromatography (HPLC) has not yet been achieved on a substrate chip. Previous work by several groups has demonstrated the difficulty in applying a sufficiently high pressure to the channels in the chip (3), and all these attempts utilised an external pump to create the driving pressure.

In nature, the process of transpiration moves water in plants. Water transport in plants puzzled scientists for more than a hundred years. In 1895 Dixon and Joly created "The Cohesion Theory" (4). In this theory, water transport laterally and vertically is modelled only by tension created in the vessels due to transpirational pull. This theory requires that plants be able to produce enough negative pressure to counterbalance the atmospheric pressure. This means that plants like *Sequoia gigantea*, which can grow up to 100 m, should be able to produce a negative pressure of amount -1 Mpa. Several studies have been undertaken to prove this theory, but failed due to questionable equipment. In the mid 1990s U. Zimmermann introduced a direct turgor pressure measurement with an adequate pressure sensor (5). According to this results, he established a new theory, which explains that the water transport in plants results from a combination of several forces. The "Multi Force Theory" involves the combined effects of *inter alia* transpiration driven tension, tissue osmotic pressure, and gel-filamentous compounds (6). The transpiration on the surface of leaves can be described as follows. The water principally evaporates in the stomata over the cell membranes of the parenchyma tissue cells. This evaporation leads to an increase in the concentrations of solutes in the cytoplasm, with an influx of water from adjacent cells counterbalancing this effect. The xylem, a capillary pipeline tissue, releases the water for these parenchyma cells through the mechanisms mentioned above, and also transmits negative pressure, resulting from the loss of water, towards the roots.

It is an aim of the present invention to use a combination of evaporation over the "stomata" (channel termini) and automatic refill by capillary forces to improve a fluid transport system, in particular an improved chromatographic system.

According to one aspect, the present invention provides a fluid transport apparatus, comprising:
a transport channel including a fluid inlet; and
an evaporator including at least one evaporator channel arranged to receive fluid, each evaporator channel having at least one open fluid outlet operable to evaporate fluid at the at least one fluid outlet so as to cause the flow of fluid thought the transport channel.

Preferably, the fluid transport apparatus is a chromatographic system and the transport channel includes a separation channel.

Preferably, the evaporator includes a gas conditioner (e.g. a fan) for conditioning the gas at the at least one fluid outlet.

Preferably, the gas conditioner comprises a gas flow unit for maintaining a gas flow over the at least one fluid outlet to gain a continuous liquid flow and to control the evaporation by the liquid vapour pressure.

Preferably, the evaporator includes a heater for raising the temperature at the at least one fluid outlet.

Preferably, the evaporator includes a plurality of fluid outlets.

Preferably, at least one of the at least one channel of the evaporator is branched.

Preferably, the evaporator includes a plurality of channels.

In a preferred embodiment the present invention is directed to a high performance/pressure liquid chromatography (HPLC) system.

The present invention advantageously provides a fluid transport system in which the pressure is generated within the transport channel.

Viewed from another aspect the invention provides a fluid transport method comprising the steps of:
introducing a fluid to a fluid inlet of a transport channel, the transport channel being in fluid communication with at least one evaporator channel of an evaporator, each evaporator channel having at least one open fluid outlet; and
evaporating fluid at the at least one fluid outlet so as to draw the fluid through the transport channel.

Various preferred aspects of the invention are set out in the accompanying claims.

Embodiments of the invention will now be described, by way of example only, with reference to the accompanying drawings in which:
Figure 1 illustrates the relationship between capillary force and capillary shape;
Figure 2 illustrates a first example embodiment of a microfabricated fluid transport apparatus;
Figure 3 shows the embodiment of Figure 2 mounted in a chip holder;
Figure 4 illustrates a second example embodiment of a microfabricated fluid transport apparatus;
Figures 5(a) to (d) illustrate preferred inlet configurations;
Figures 6(a) to (d) illustrate preferred separation channel configurations;
Figures 7(a) and (b) illustrate preferred single channel evaporator configurations;
Figures 8(a) to (d) illustrate preferred multi-channel configurations;
Figure 9 illustrates a chip design in accordance with a first preferred embodiment;
Figure 10 illustrates a chip design in accordance with a second preferred embodiment;
Figure 11 illustrates a chip design in accordance with a third preferred embodiment;
Figure 12 illustrates a chip design in accordance with a fourth preferred embodiment;
Figure 13 illustrates a chip design in accordance with a fifth preferred embodiment;
Figures 14(a) and (b) illustrate a chip design in accordance with a sixth preferred embodiment;
Figures 15(a) and (b) illustrate a chip design in accordance with a seventh preferred embodiment;
Figures 16(a) and (b) illustrate a chip design in accordance with an eighth preferred embodiment;
Figures 17(a) and (b) illustrate a chip design in accordance with a ninth preferred embodiment;
Figure 18 illustrates a fabrication technique for a fluid transport apparatus; and
Figure 19 illustrates measurements of travel time for given distances.

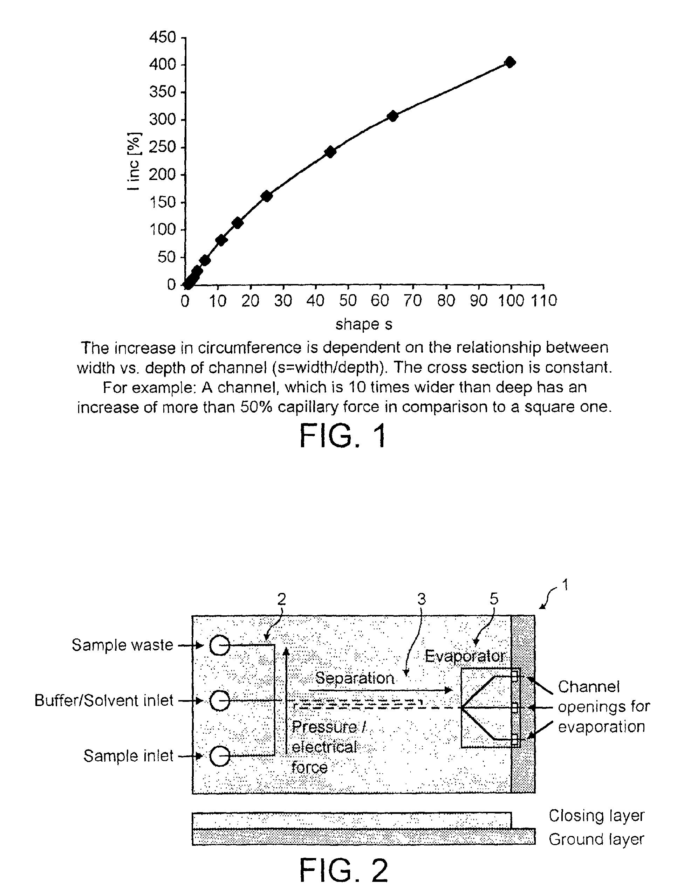

In a capillary channel, liquid therein is moved by the capillary force towards the gas/liquid interface, where the liquid evaporates continuously, due to the liquid vapour pressure. This lowers the volume of liquid infinitesimally and is counterbalanced by refilling of the capillary through capillary force. Important factors are that the capillary force essentially depends on the contact angle between the liquid and inner capillary wall, the circumferences of the channels and the ability of the liquid to transmit the pressure differential. Unlike the channel geometry, the contact angle and the viscosity are material properties, which cannot be altered for a given system. As illustrated in Figure 1, in order to enhance the capillary force, the circumference may be scaled up for a given cross section by changing the shape of the channel.

The capillary force is described as:
*F*_{*Capillary*} *=* σ.*l*
σ is the surface tension
*l* is the length of the circumference.

Therefore, the channel geometry is of significant importance. For maximum capillary force, the circumference has to be increased for a given channel cross section. Since wide and shallow channels have a tendency to collapse, the determination of an optimal channel geometry is quite complex. Channels of a small scale, typically a few micrometers, can be produced quite readily and are stable in height.

Furthermore, the concept of open tubular (OT) channels is ideal for channels of very small dimension, and, in a preferred embodiment, the present invention is directed to an open tubular-HPLC (OT-HPLC) system.

The efficiency of chromatographic systems depends on several parameters, such as the column geometry (length and inner diameter), column material, applied driving force, etc. In the 1950s, Aris and Golay founded the basic equations, which describe open tube chromatography (OTC). In comparison to a packed column, an open tubular system has at most a coating on the inner capillary wall. According to theory, channels with very small dimensions are ideally suited for open tube chromatography and efficiencies in excess of 1 million theoretical plates can be achieved (7). One of the first attempts to run OT-HPLC on chip was ten years ago, the so called "Hitachi-chip" (8).

Figure 2 illustrates a schematic of a micro-fabricated liquid transport system in accordance with a first embodiment of the present invention. The micro-fabricated chip-based fluid transport system 1 includes a liquid inlet 2, in this embodiment a three-point inlet, a transport channel 3, in this embodiment a separation channel or column, and an evaporator 5.

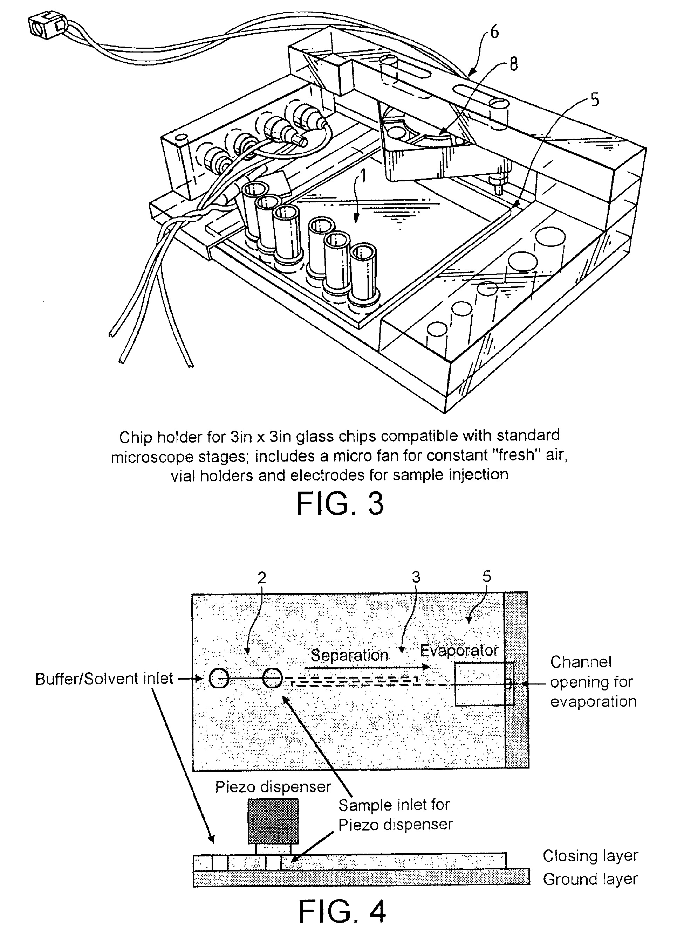

Figure 3 illustrates the fluid transport system of Figure 22 mounted in a chip holder 6. In this embodiment the evaporator 5 includes a fan 8 for maintaining an air flow over the fluid outlets of the evaporator 5 and conditioning the air thereat.

Figure 4 illustrates a schematic of a micro-fabricated liquid transport system in accordance with a second embodiment of the present invention. The micro-fabricated chip-based fluid transport system 1 includes a liquid inlet 2, in this embodiment a two-point inlet, a transport channel 3, in this embodiment a separation channel or column, and an evaporator 5.

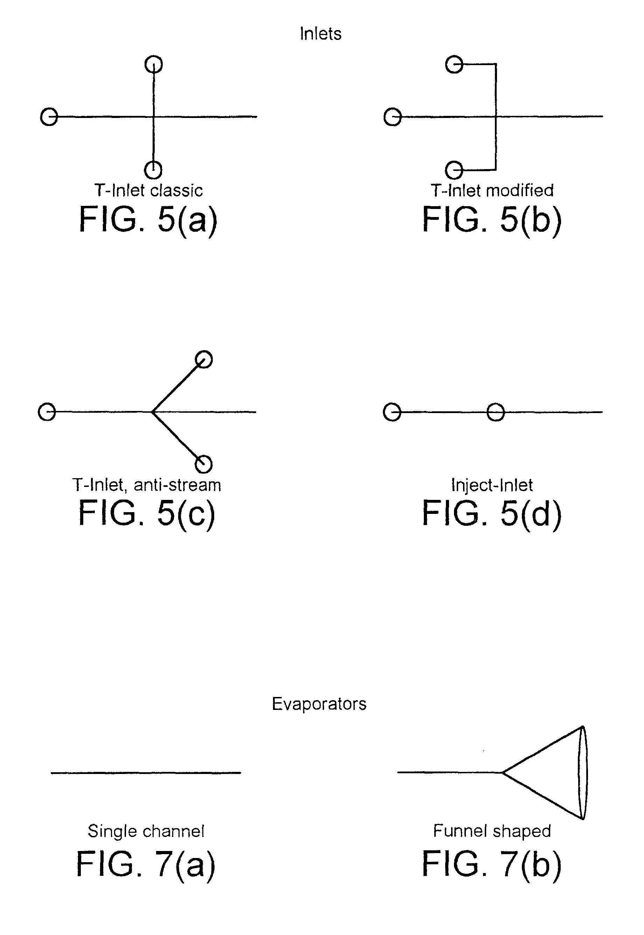

Figures 5(a) to (d) illustrate preferred inlet configurations.

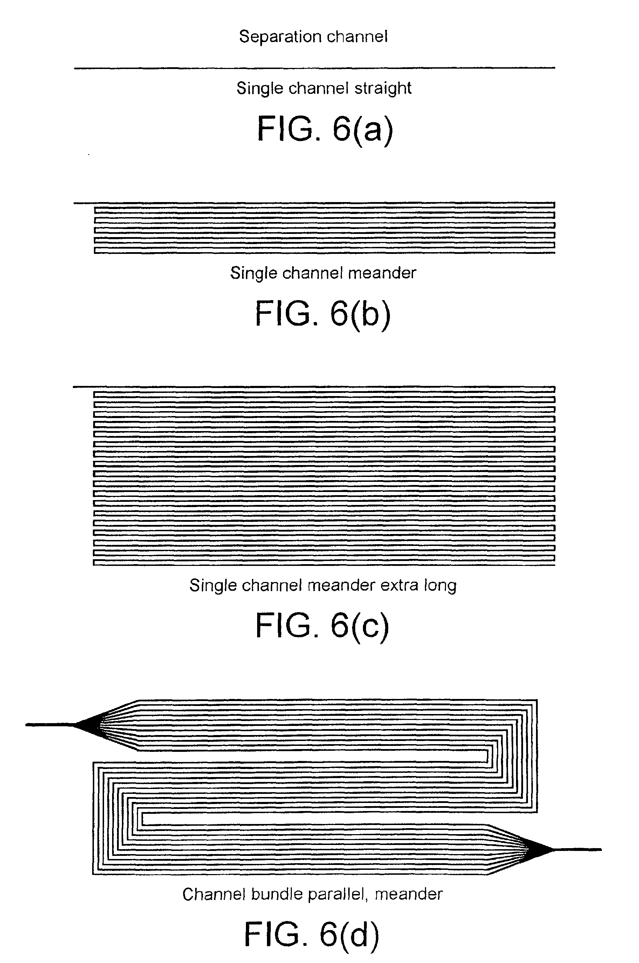

Figures 6(a) to (d) illustrate preferred separation channel configurations.

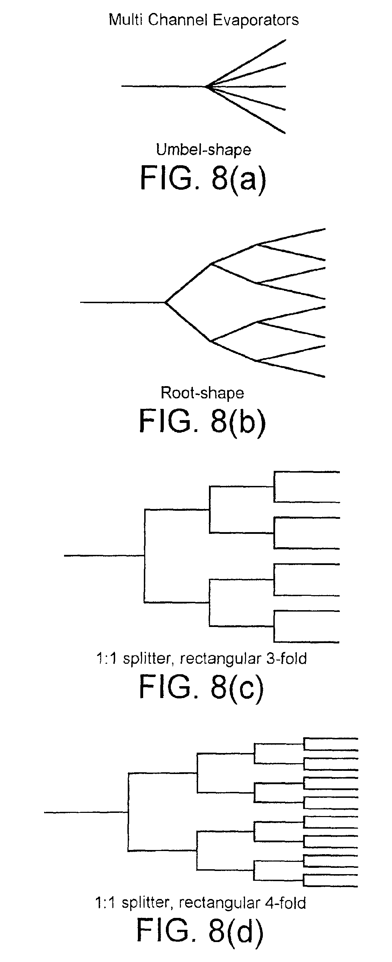

Figures 7(a) and (b) illustrate preferred single channel evaporator configurations.
Figures 8(a) to (d) illustrate preferred multi-channel configurations.

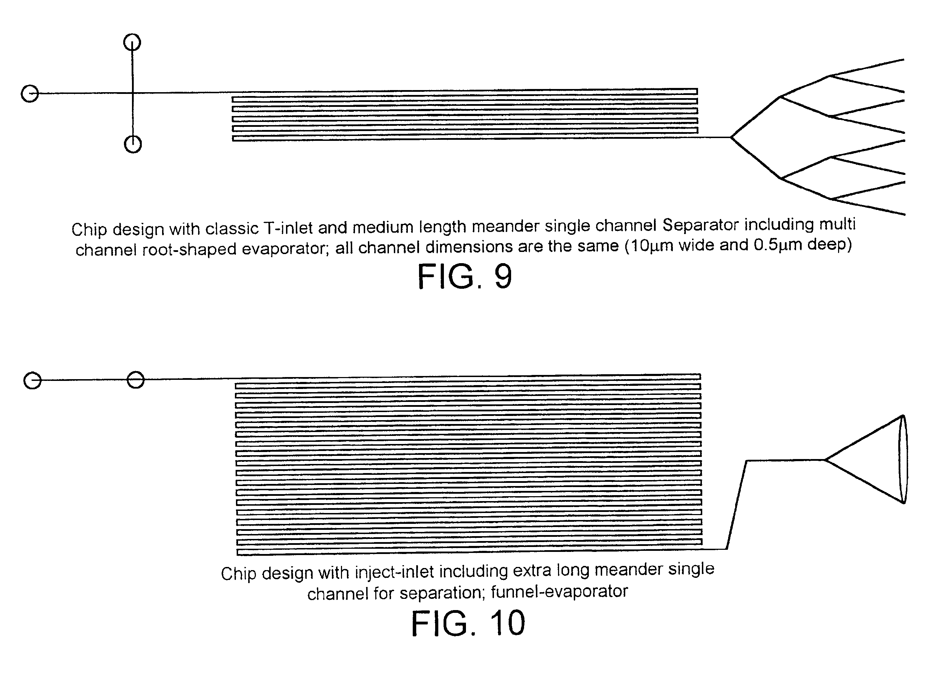

Figure 9 illustrates a chip design in accordance with a first preferred embodiment.
Figure 10 illustrates a chip design in accordance with a second preferred embodiment.

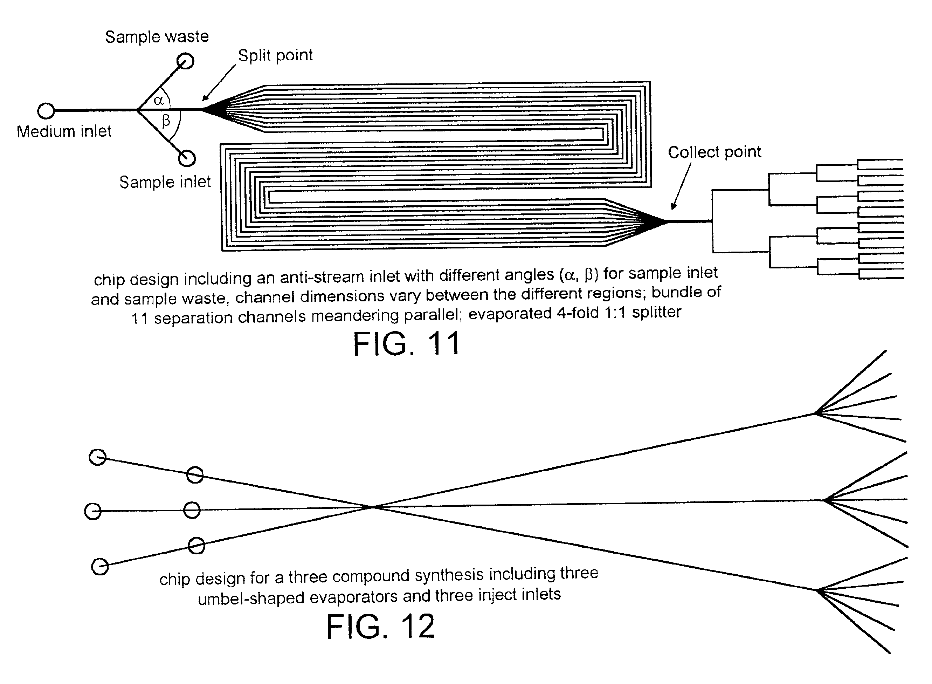

Figure 11 illustrates a chip design in accordance with a third preferred embodiment.
Figure 12 illustrates a chip design in accordance with a fourth preferred embodiment.

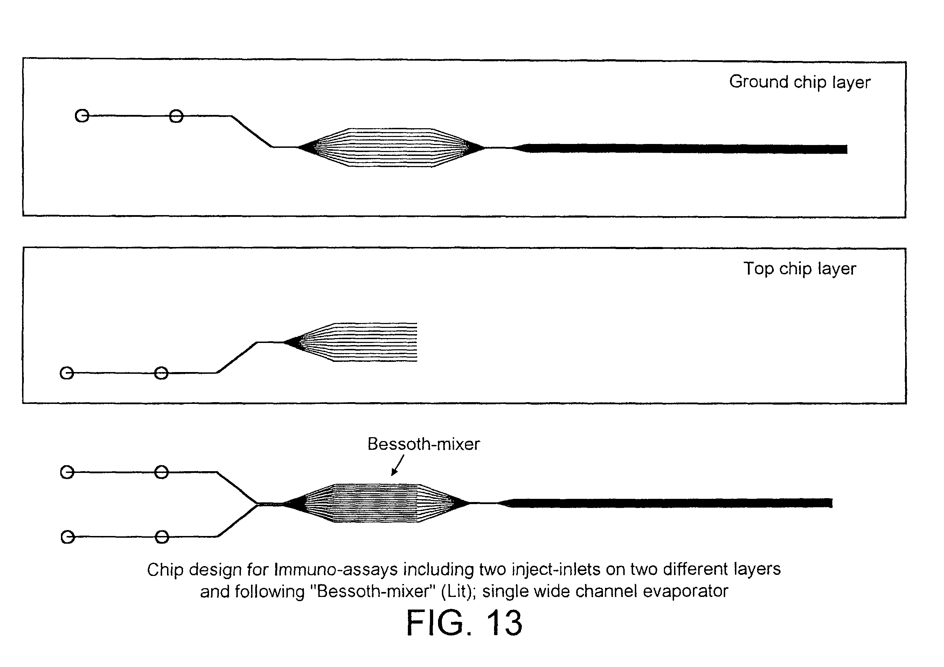

Figure 13 illustrates a chip design in accordance with a fifth preferred embodiment.

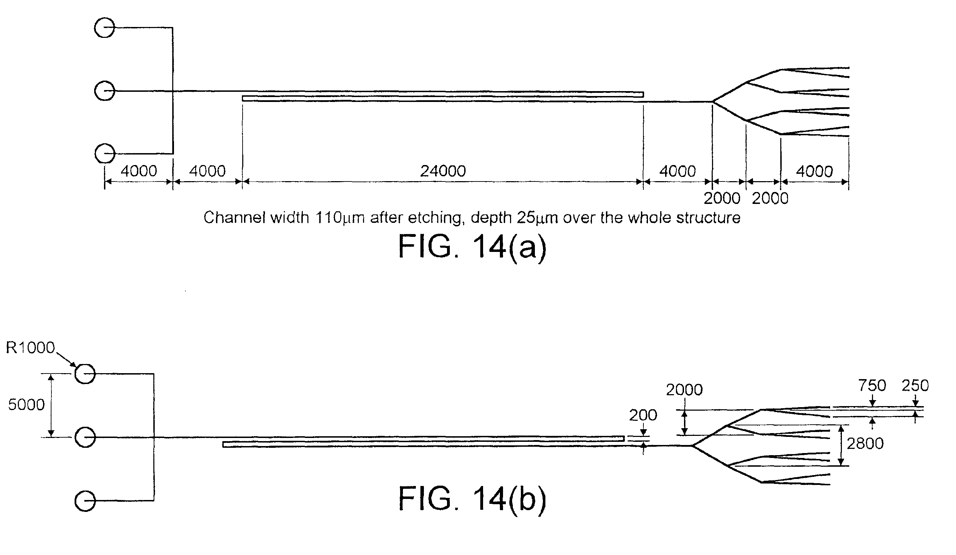

Figures 14(a) and (b) illustrate a chip design in accordance with a sixth preferred embodiment.

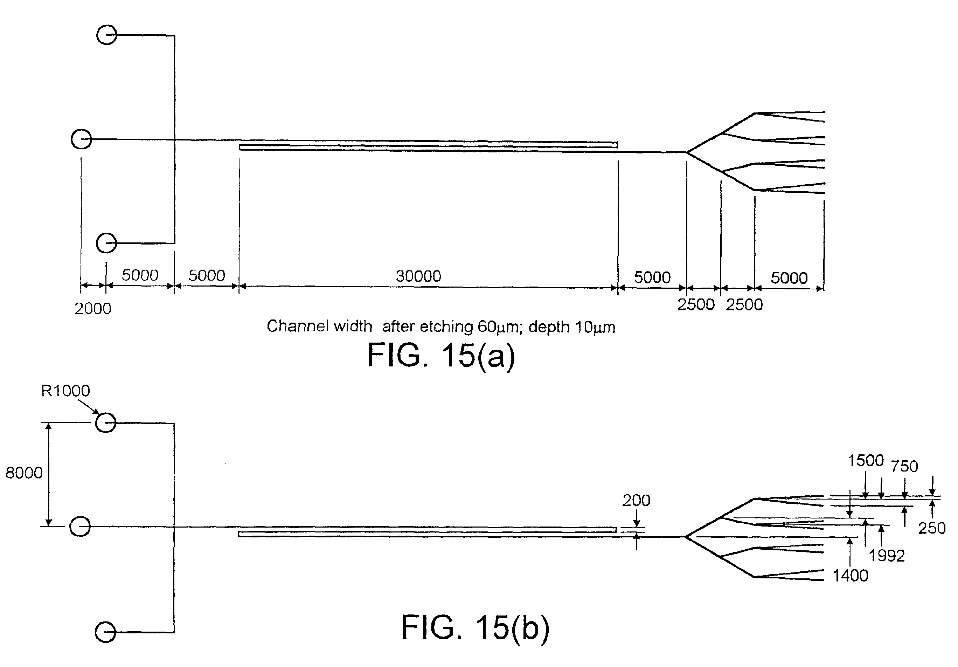

Figures 15(a) and (b) illustrate a chip design in accordance with a seventh preferred embodiment.

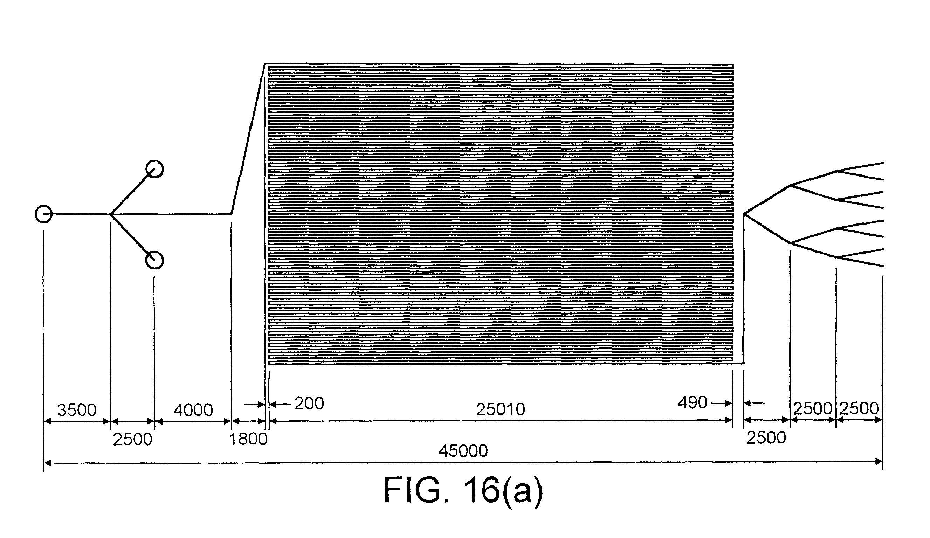

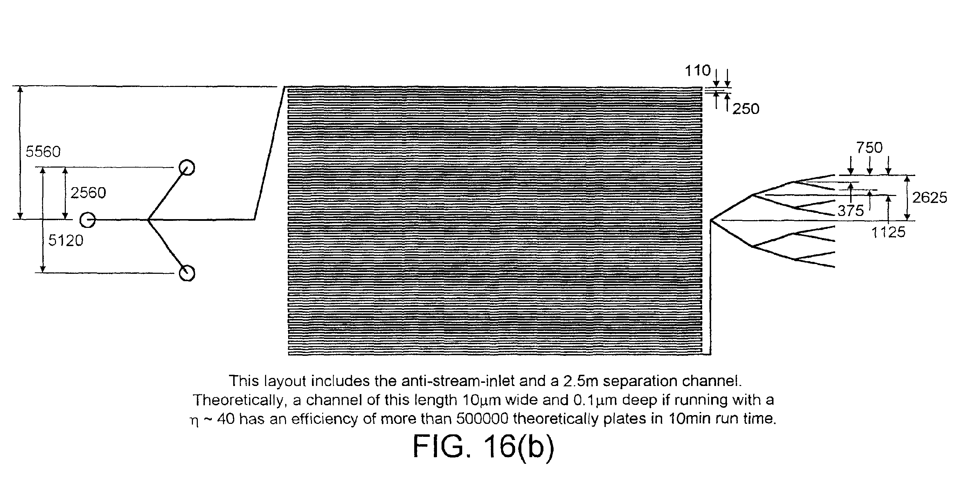

Figures 16(a) and (b) illustrate a chip design in accordance with an eighth preferred embodiment.

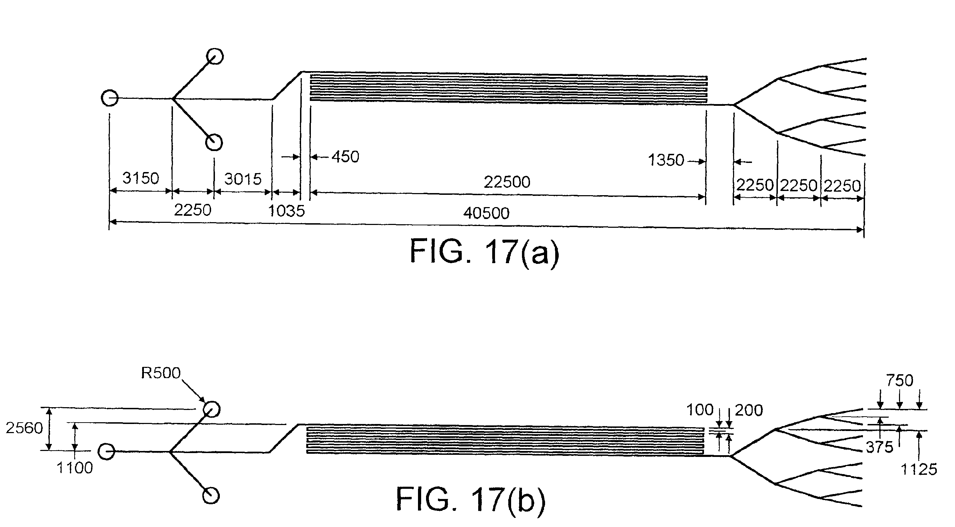

Figures 17(a) and (b) illustrate a chip design in accordance with a ninth preferred embodiment.

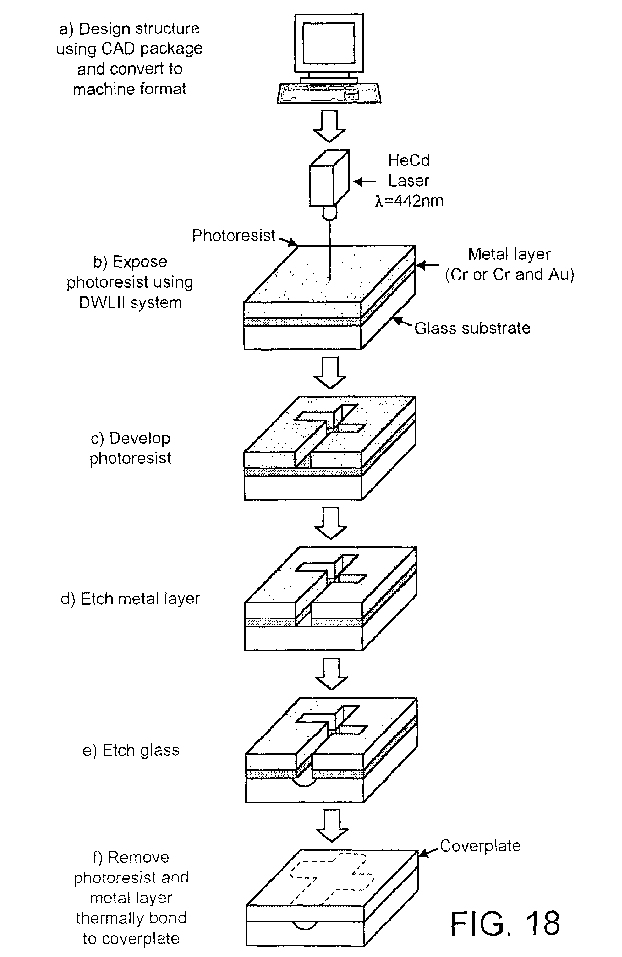

In a preferred embodiment the micro-fabricated devices are fabricated using the direct-write laser lithography process. This process can be used to etch large, complex structures, typically up to around 10 x 10 cm, with very narrow channels, typically a few microns, in a glass or silicon without the need for a mask. The process can also be used to create moulds for polymer devices, for example in PDMS, and masks which can be used for more convention forms of lithography. As illustrated in Figure 18, the micro-fabrication process is as follows:
a) The first step in the micro-fabrication of a device is to design the chip layout using a CAD package, such as AutoCAD. This design is then converted into the machine data format used by the lithography system via special conversion software.
b) A direct-writing laser exposes a commercially available glass substrate/wafer, which contains a metal layer and photo resist.
c) After exposure, the substrate is then developed to remove the exposed photo-resist, leaving an image of the design in the photo-resist.
d) The metal layer is then etched away using a suitable etching solution to reveal the glass.
e) The glass is then etched to produce the channels of the device. The amounts of hydrofluoric acid (HF) and ammonium fluoride (NH₄F) for glass etching differ depending on the required etch rate.
f) After etching, the photo-resist and any metal layer are removed and a glass cover-plate is thermally bonded on top of the substrate to complete the device. Holes are drilled in the cover-plate before bonding to interface the device with the necessary pumps and injection systems.

### Example 1

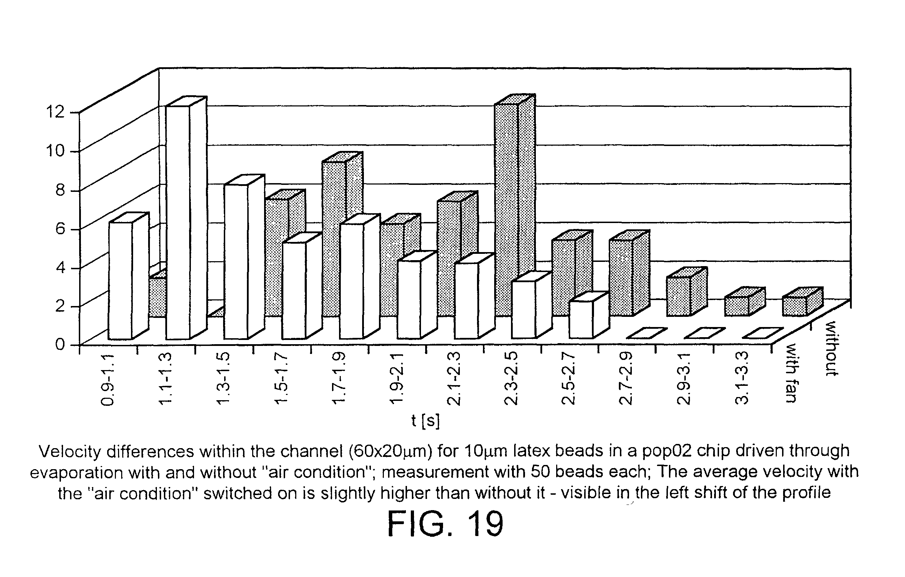

In order to enable visualisation of the movement of the liquid in the fluid transport system of Figure 14, latex beads of 10µm in diameter were introduced into the channel 3. Measurements were obtained by estimating the travel time for a given distance (see Figure 19). The velocity of the liquid within the device for 10µm beads was ≥ 350µm/s. The measurements show little difference in the velocity regardless of air condition. However, significantly, with no air conditioning, some beads changed their velocity (increasing as well as decreasing) occasionally by a significant amount. Moreover, it has been established that the liquid velocity is due to the evaporation and not height effects.

### Example 2

Fluorescence experiments were also performed. Fluorescine (5 mM in sodium phosphate buffer pH 8.08) was passed through the channel 3 from the inlet. These experiments show smearing at the inlet cross-section into the channel 3. Modified inlets have been developed, including the inlet of Figure 5(c) in which the sample is injected from first to second angled inlets by an electro-generated current.

In a preferred embodiment liquids other than water, such as acetonitrile and methanol, organic solvents or standard mixtures for liquid chromatography can be used as the operating medium.

In preferred embodiments the channels of the transport system have sub-micron dimensions. In terms of lithographic techniques, channel widths of less than 1 µm can be achieved. There is an upper limit to the channel width where the channel is unsupported, as, if the channels are too wide, then the upper substrate layer can deform or fracture. Therefore, wide channels require support structures. The channel depth is limited by the overall substrate thickness. The channel length is for practical purposes not limited as channels having a 30 m meander can be achieved even on a small chip. Generally, the longer the channel, the greater the separation, the longer the travel times and the greater the band broadening. Also, the longer the channel, the higher the backpressure created therewithin. This said, although pumps capable of generating over 400 bar are available, those pumps cannot be readily coupled to a chip. For channels with sub-micron dimensions in either depth or width, the pressures required to transport liquid therethrough can easily be several thousand bar. These pressures are not obtainable in pumped systems and can only be achieved by the evaporative system of the present invention.

The preferred channel geometries are as follows:

| Length [cm] | |
|---|---|
| | |
| 1-3.1 | Suitable for CE and synthesis chips, very fast |
| 5-30 | Suitable for CE, synthesis and chromatography chips, still fast |
| 30-100 | Suitable for GC and LC chips |
| 100-500 | Suitable for GC and LC chips |
| 500-3000 | LC chips |
| | |

| Width [µm] | |
|---|---|
| 0.2-2 | Suitable for inlets or in splitter areas as part of a mixing device |
| 2-10 | Suitable for inlets and small separation channels, high pressure being required to transport the liquid through long channels |
| 10-50 | Suitable for all devices |
| 50-200 | Suitable for all devices |
| 200-1000 | Where shallow, two-dimensional analysis can be performed |
| | |

| Depth[µm] | |
|---|---|
| | |
| 0.1-1 | Suitable for open tubular chromatography, allows fabrication from silicon with a glass cover plate |
| 1-10 | Suitable for all applications |
| 10-50 | Suitable for all applications |
| 50-250 | Suitable for biological applications |
| 250-1000 | Suitable for high volume applications |
| CE = Capillary Electrophoresis | |
| GC = Gas Chromatography | |
| LC = Liquid Chromatography | |

The accompanying claims set out various aspects of at least preferred embodiments of the invention.

### REFERENCES

(1) Becker, H.; Lowack, K.; Manz, A., *Journal of Micromechanics and Microengineering* **1998,** 8, 24-28.
(2) Effenhauser, C. S., Manz, A.; Widmer, H. M., *Analytical Chemistry* **1993,** 65, 2637-2642.
(3) Ocvirk, G.; Verpoorte, E.; Manz, A.; Grasserbauer, M.; Widmer, H. M., *Analytical Methods and Instrumentation* **1995,** 2, 74-82.
(4) Dixon, H. H.; Joly, J. *Philosophical Transactions Royal Society London* **1895,** B 186, 563-576.
(5) Balling, A,; Zimmermann, *U. Planta* **1990,** 182, 325-338.
(6) Zimmermann, U.; Meinzer, F.; Bentrup, F. W. *Annals of Botany* **1995,** 76, 545-551.
(7) Knox, J. H.; Gilbert, M. T.; *Journal of Chromatography* **1979,** 186, 401-418.
(8) Manz, A,; Miyahara, Y.; Miura, J.; Watanabe, Y.; Miyagi, H,; Stao, K,; Sensors and Actuators B-Chemical 1990, 1, 249-255.

## Claims

1. A fluid transport apparatus, comprising:
a transport channel including a fluid inlet; and
an evaporator including at least one evaporator channel arranged to receive fluid, each evaporator channel having at least one open fluid outlet operable to evaporate fluid at the at least one fluid outlet so as to cause the flow of fluid thought the transport channel.

2. The fluid transport apparatus as claimed in claim 1, wherein the transport system is a chromatographic system and the transport channel includes a separation channel.

3. The fluid transport apparatus as claimed in claim 1 or claim 2, wherein the evaporator includes a gas conditioner for conditioning the gas at the at least one fluid outlet.

4. The fluid transport apparatus as claimed in claim 3, wherein the gas conditioner comprises a gas flow unit for maintaining a gas flow over the at least one fluid outlet.

5. The fluid transport system of any preceding claim, wherein the evaporator includes a heater for raising the temperature at the at least one fluid outlet.

6. The fluid transport system of any preceding claim, wherein the evaporator includes a cooler for controlling the temperature at the at least one fluid outlet.

7. The fluid transport apparatus of any preceding claim, wherein the evaporator includes a plurality of fluid outlets.

8. The fluid transport apparatus of any preceding claim, wherein at least one of the at least one channel of the evaporator is branched.

9. The fluid transport apparatus of any preceding claim, wherein the evaporator includes a plurality of channels.

10. The fluid transport apparatus of any preceding claim, wherein the transport channel has a width of less than 20 micrometers.

11. The fluid transport apparatus of any preceding claim wherein the transport channel has a depth of less than 20 micrometers.

12. The fluid transport apparatus of any preceding claim, wherein the fluid transport system acts on a fluid comprising an operating fluid.

13. The fluid transport apparatus of claim 12, wherein the operating fluid comprises water.

14. The fluid transport apparatus of claim 12 or 13, wherein the operating fluid comprises acetonitrile, methanol, standard mixtures for chromatographic systems or organic solvents.

15. The fluid transport apparatus of any one of the preceding claims comprising two plates between which said transport channel and said evaporator channel are formed.

16. The fluid transport apparatus of claim 15, wherein at least one of said plates is formed of one of glass silicon, poly-di-methyl-siloxane and other polymeric material.

17. A high pressure liquid chromatography (HPLC) apparatus comprises the transport apparatus of any preceding claim.

18. The high pressure liquid chromatography (HPLC) apparatus of claim 17, wherein the HPLC apparatus is an open tubular HPLC system.

19. The high pressure liquid chromatography (HPLC) apparatus of claim 17, wherein the HPLC apparatus contains a packed bed.

20. The high pressure liquid chromatography (HPLC) apparatus of claim 17, wherein the HPLC apparatus contains a porous monolith.

21. A fluid transport method comprising the steps of:
introducing a fluid to a fluid inlet of a transport channel, the transport channel being in fluid communication with at least one evaporator channel of an evaporator, each evaporator channel having at least one open fluid outlet; and
evaporating fluid at the at least one fluid outlet so as to draw the fluid through the transport channel.
